# EUROPÄISCHE PATENTSCHRIFT

(11) **EP 3 006 776 B1**
(45) Veröffentlichungstag und Bekanntmachung des Hinweises auf die Patenterteilung: **22.04.2020**
(21) Anmeldenummer: 15185924.6
(22) Anmeldetag: 18.09.2015
(51) Int. Cl.: B60W 10/105, F16H 3/72, B60L 1/00, B60W 10/26, B60W 30/188

(54) **GETRIEBESTEUERVERFAHREN**
METHOD OF CONTROLLING A TRANSMISSION
PROCEDE DE COMMANDE DE TRANSMISSION

(30) Priorität: 25.09.2014 DE 102014219438; 04.05.2015 DE 102015208160
(43) Veröffentlichungstag der Anmeldung: 13.04.2016
(73) Patentinhaber: Deere & Company, Moline, IL 61265 (US)
(72) Erfinder: Gugel, Rainer, 68723 Plankstadt (DE); Fritz, Norbert, 68549 Ilvesheim (DE); Müller, David, 76297 Stutensee (DE); Rekow, Andrew K, Cedar Falls, IA Iowa 50613 (US); Jeffries, Dennis L, Waterloo, IA Iowa 50701 (US)
(74) Vertreter: Dehnhardt, Florian Christopher

(56) Entgegenhaltungen:
- DE-A1-102011 087 946
- DE-A1-102012 204 477
- US-A1- 2008 103 002

## Beschreibung

Die Erfindung betrifft ein Verfahren zur Ansteuerung einer leistungsverzweigten Getriebevorrichtung in einem Fahrzeug, wobei die Getriebevorrichtung einen elektrischen Variator und ein Getriebe mit verstellbarer Übersetzung umfasst, um einen Antriebsmotor mit einem Fahrantrieb des Fahrzeugs zu verbinden undwobei der elektrische Variator ein Summierungsgetriebe, zumindest eine erste und zumindest eine zweite elektrische Maschine und eine Steuerung der elektrischen Maschinen zum stufenlosen Variieren einer Übersetzung des Summierungsgetriebes umfasst.

Stufenlos leistungsverzweigte Getriebevorrichtungen sind in Baumaschinen und landwirtschaftlichen Arbeitsmaschinen, beispielsweise Traktoren, nach heutigem Stand der Technik insbesondere häufig im Premiumsegment anzutreffen und als hydraulischmechanisch leistungsverzweigte Getriebe ausgeführt. Der Leistungsfluss teilt sich hierbei in einen mechanischen Pfad, regelmäßig über einen oder mehrere Planetenradsätze geführt, und in einen hydrostatischen Pfad auf, in dem die Leistung über einen hydrostatischen Variator geführt wird, mit dem eine stufenlose Einstellung der Übersetzung vorgenommen werden kann. Am Markt erhältlich sind derartige Getriebevorrichtungen beispielsweise von Herstellern wie John Deere oder Fendt.

Aus der DE 197 49 074 C2 und der DE 10 2012 204 477 A1 sind stufenlos leistungsverzweigte Getriebevorrichtungen bekannt, bei denen der variable Pfad jeweils als elektrischer Variator ausgeführt ist. Bei derartigen elektro-mechanischen Getrieben wird sowohl mechanische als auch elektrische Leistung als Antriebsleistung genutzt.

Eine andere Entwicklungsrichtung bei Baumaschinen und landwirtschaftlichen Arbeitsfahrzeugen besteht in dem Aufbau eines zu dem bestehenden Bordnetz der Maschine zusätzlichen und mit einer höheren Nennspannung betriebenen zweiten Bordnetzes, mit dem elektrische Verbraucher, die eine derart höhere Nennspannung für ihren Betrieb benötigen, angetrieben werden können. Diese elektrischen Verbraucher können sowohl auf der Maschine an sich als auch auf einem Anbaugerät angeordnet sein. Herkömmlicherweise wird dieses zusätzliche zweite Bordnetz auf der Maschine durch ein eigenes dafür vorgesehenes Generatorsystem erzeugt. Hierbei entstehen allerdings zusätzliche Produktkosten und es reduziert sich der Gesamtwirkungsgrad infolge der zusätzlichen Bauteile.

Die 10 2011 087 946 A1 offenbart ein elektrisch leistungsverzweigtes Getriebe, mit einer elektrischen Maschine als Motor und einer elektrischen Maschine als Generator. Die als Generator ausgeführte elektrische Maschine versorgt auch einen Nebenabtrieb mit elektrischer Energie.

Ausgehend hiervon besteht die Aufgabe der vorliegenden Erfindung darin, ein Verfahren anzugeben, mit dem ein zweites Bordnetz auf dem Fahrzeug in integrierter Weise gespeist werden kann.

Die Aufgabe wird gelöst durch ein Verfahren nach dem Oberbegriff des Anspruchs 1, bei dem erfindungsgemäß bei Erkennen einer externen Leistungsanforderung eines elektrischen Verbrauchers ein Übersetzungsbereich des Getriebes mit verstellbarer Übersetzung derart eingestellt wird, dass die zweite elektrische Maschine generatorisch und die erste elektrische Maschine derart betrieben wird, dass eine bezogen auf die externe Leistungsanforderung bestehende Leistungsunterdeckung oder Leistungsüberdeckung kompensiert wird.

Die erste elektrische Maschine kann bevorzugterweise spannungsgeregelt betrieben werden. Hierdurch wird die für die Regulierung eines Gleichstromzwischenkreises erforderliche elektrische Leistung produziert oder verbraucht. Die zweite elektrische Maschine kann drehzahlgeregelt betrieben werden. Hierdurch wird die elektrische Leistung produziert oder verbraucht, um abhängig von der aktuell herrschenden Traktionsanforderung des Fahrzeugs über die Drehzahl der zweiten elektrischen Maschine die Übersetzung des Summierungsgetriebes einzustellen. Als Kogeneration soll nun ein Zustand bezeichnet werden, in dem beide elektrische Maschinen generatorisch betrieben werden. Unter externer Leistungsanforderung wird in diesem Kontext eine Leistungsanforderung verstanden, die außerhalb der Getriebevorrichtung entsteht. Somit kann die externe Leistungsanforderung beispielsweise von einem auf dem Arbeitsfahrzeug angeordneten elektrischen Verbraucher oder von einem auf einem Anbaugerät des Arbeitsfahrzeugs angeordneten elektrischen Verbraucher stammen.

Unter einer Leistungsunterdeckung bzw. Leistungsüberdeckung wird in diesem Kontext eine Differenz zwischen der von den beiden elektrischen Maschinen oder nur einer der elektrischen Maschinen erzeugten elektrischen Leistung und der Höhe der externen Leistungsanforderung dahingehend verstanden, dass eine Unterdeckung vorliegt, wenn die externe Leistungsanforderung die erzeugte elektrische Leistung übersteigt, und dass eine Überdeckung vorliegt, wenn die erzeugte elektrische Leistung die externe Leistungsanforderung übersteigt.

Es kann der Fall auftreten, dass die zweite elektrische Maschine eine elektrische Leistung in einer bestimmten Höhe erzeugt, aber ein höherer externer Leistungsbedarf besteht. Um diese Differenz zumindest teilweise zu kompensieren kann die erste elektrische Maschine ebenfalls generatorisch betrieben werden. Es kann andererseits der Fall auftreten, dass die zweite elektrische Maschine eine elektrische Leistung in einer bestimmten Höhe erzeugt, aber ein niedrigerer externer Leistungsbedarf besteht. Um diese Differenz, die dann einen Leistungsüberschuss darstellt, zu kompensieren, wird die erste elektrische Maschine motorisch betrieben, um diesen Leistungsüberschuss aufzunehmen und als Blindleistung in das Summierungsgetriebe zurückzuführen.

Erfindungsgemäß ist nun erkannt worden, dass eine im Variatorzweig entgegen der ursprünglichen Richtung fließende Blindleistung zur Deckung einer externen Leistungsanforderung herangezogen werden kann. Hierzu kann gezielt ein solcher Übersetzungsbereich des Getriebes mit verstellbarer Übersetzung eingestellt werden, dass das Summierungsgetriebe eine Leistung in den Variatorzweig hinein abgibt. Diese in den Variatorzweig abgegebene Leistung wird nicht als Blindleistung in das Summierungsgetriebe zurückgeführt, da sie erfindungsgemäß über die zweite elektrische Maschine und über die Steuerung als elektrische Leistung zur Deckung der externen Leistungsanforderung abgeführt wird. Wenn die externe Leistungsanforderung nicht von der zweiten elektrischen Maschine alleine gedeckt werden kann, kann auch die erste elektrische Maschine generatorisch betrieben werden, so dass beide elektrische Maschinen im Sinne der Kogeneration betrieben werden. Der Vorteil dieses Betriebsmodus besteht darin, dass mittels zweier elektrischer Maschinen ein externer Leistungsbedarfs gedeckt werden kann, so dass das Leistungsniveau jeder einzelnen Maschine und der entsprechenden Elektronik reduziert werden kann.

Bevorzugt wird das Summierungsgetriebe durch ein Planetenradgetriebe mit drei Antriebsschnittstellen gebildet, wobei je nach Richtung des Leistungsflusses die Antriebsschnittstellen als Eingang oder als Ausgang des Planetenradgetriebes wirken können. Es kann vorgesehen sein, dass der Antriebsmotor mit der ersten Antriebsschnittstelle des Planetenradgetriebes antriebsverbunden ist, um die Getriebevorrichtung mit Antriebsleistung zu versorgen, die wiederum über das mit der zweiten Antriebsschnittstelle des Planetenradgetriebes verbundene Getriebe mit verstellbarer Übersetzung an den Fahrantrieb weitergegeben werden kann. Weiterhin kann vorgesehen sein, dass die zweite der beiden elektrischen Maschinen mit der dritten Antriebsschnittstelle des Planetenradgetriebes antriebsverbunden ist, um eine variable Übersetzung zwischen der ersten Antriebsschnittstelle und der zweiten Antriebsschnittstelle des Planetenradgetriebes darzustellen. Bevorzugt ist die zweite der beiden elektrischen Maschinen mit dem Antriebsmotor des Arbeitsfahrzeugs antriebsverbunden, wobei dies unter Zwischenschaltung einer Übersetzung in Form einer Stirnradstufe erfolgen kann.

Während des Antriebs der Arbeitsmaschine durch den Antriebsmotor kann die zweite elektrische Maschine im Generatorbetrieb und im Motorbetrieb betrieben werden. Der Generatorbetrieb erzeugt elektrische Leistung, die per Definition mit einem negativen Vorzeichen versehen ist, und der Motorbetrieb benötigt bzw. verbraucht elektrische Leistung. Der Leistungsbedarf im Motorbetrieb beziehungsweise die Leistungsabgabe im Generatorbetrieb der zweiten elektrischen Maschine ist abhängig von der erforderlichen Zugkraft des Arbeitsfahrzeugs und der nötigen Drehzahl der zweiten elektrischen Maschine, um das einzustellende Übersetzungsverhältnis des Planetenradgetriebes zu erreichen.

Im Fall einer externen Leistungsanforderung kann ein Übersetzungsbereich des Getriebes mit verstellbarer Übersetzung gewählt werden, so dass die zweite elektrische Maschine im Generatorbetrieb betrieben wird. Die von der zweiten elektrischen Maschine im Generatorbetrieb abgegebene elektrische Leistung kann über die Steuerung einem externen elektrischen Verbraucher zur Verfügung gestellt, um einen bestehenden externen Leistungsbedarf zu decken. Insgesamt steigt durch das erfindungsgemäße Getriebesteuerverfahren der an der Ausgangswelle und der Steuerung der Getriebevorrichtung erzielte Gesamtwirkungsgrad, da die elektrische Leistung der zweiten Maschine zur Erfüllung von Zugkrafterfordernissen ohnehin erzeugt werden muss. Der Vorteil besteht nun darin, dass diese elektrische Leistung nicht als Blindleistung über den Variatorzweig wieder in das Planetenradgetriebe eingespeist wird, sondern über die Steuerung einem externen elektrischen Verbraucher zur Verfügung gestellt wird.

Bevorzugt wird eine Übersetzung des Getriebes unter Berücksichtigung eines Fahrwiderstandes, der externen Leistungsanforderung und eines Fahrgeschwindigkeitswunsches eingestellt. Hierdurch wird sichergestellt, dass ein Übersetzungsbereich des Getriebes mit verstellbarer Übersetzung nur dann angesteuert wird bzw. nur dann ein anderer als der vorliegende Übersetzungsbereich angesteuert wird, wenn der momentan herrschende Fahrwiderstand und die Fahrgeschwindigkeit dies erlauben.

Bevorzugt ist ein mit der Steuerung verbundener Energiespeicher vorgesehen, um eine bezogen auf die externe Leistungsanforderung bestehende Leistungsüberdeckung oder Leistungsunterdeckung zu kompensieren. Hierdurch ist gewährleistet, dass im Falle einer Leistungsüberdeckung nochmals weniger Leistung als Blindleistung zirkuliert und im Falle einer Leistungsunterdeckung kann aus dem Energiespeicher Leistung zugesteuert werden.

Bevorzugt erfolgt über die Steuerung eine Drehmomentverstellung der elektrischen Maschinen unabhängig von der Drehzahl der elektrischen Maschinen, um Energie in jede der elektrischen Maschinen oder einen Energiespeicher zu speisen und jede der beiden elektrischen Maschinen generatorisch zu betreiben.

Die Erfindung wird im Folgenden anhand der Figuren beschrieben. Hierin zeigen
- Figur 1: ein landwirtschaftliches Arbeitsfahrzeug mit einem Anbaugerät;
- Figuren 2a - 2c: Blockschaltbilder einer Antriebsanordnung mit verschiedenen Leistungsflüssen;
- Figur 3a: eine Antriebsanordnung zur Ausführung des erfindungsgemäßen Getriebesteuerverfahrens;
- Figur 3b: Drehzahl-Geschwindigkeits-Diagramm für die Antriebsanordnung gemäß Figur 3a;
- Figur 3c: elektrische Leistungsverläufe über der Fahrzeuggeschwindigkeit ohne erfindungsgemäße Getriebesteuerung für die Antriebsanordnung gemäß Figur 3a;
- Figur 3d: elektrische Leistungsverläufe über der Fahrzeuggeschwindigkeit mit erfindungsgemäßer Getriebesteuerung;
- Figur 4a: weitere Antriebsanordnung zur Ausführung des erfindungsgemäßen Getriebesteuerverfahrens;
- Figur 4b: Drehzahl-Geschwindigkeits-Diagramm für die Antriebsanordnung gemäß Figur 4a;
- Figur 5a: weitere Antriebsanordnung zur Ausführung des erfindungsgemäßen Getriebesteuerverfahrens;
- Figur 5b: Drehzahl-Geschwindigkeits-Diagramm für die Antriebsanordnung gemäß Figur 5a;
- Figur 6a: weitere Antriebsanordnung zur Ausführung des erfindungsgemäßen Getriebesteuerverfahrens;
- Figur 6b: Drehzahl-Geschwindigkeits-Diagramm für die Antriebsanordnung gemäß Figur 6a und
- Figuren 7a, 7b: weitere Antriebsanordnungen zur Ausführung des erfindungsgemäßen Getriebesteuerverfahrens.

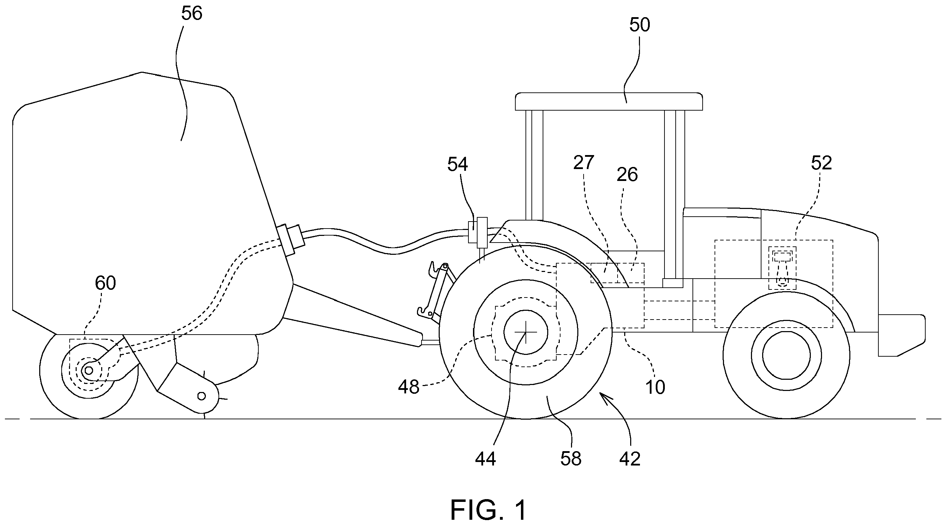

Die Figur 1 zeigt eine mögliche Anordnung eines landwirtschaftlichen Arbeitsfahrzeugs 50 mit einer nur schematisch angedeuteten leistungsverzweigten Getriebevorrichtung 10, die von einem Antriebsmotor 52 angetrieben wird und dazu hergerichtet ist, eine elektrische Leistung über eine Steuerung 26 und eine Leistungsschnittstelle 54 in Form eines AEF-Konnektors einem elektrischen Verbraucher 60 in Form einer elektrischen Antriebsachse auf einem Anbaugerät 56 bereitzustellen. Weiterhin wird über die Getriebevorrichtung 10 eine Antriebsleistung auf einen Fahrantrieb 42 übertragen. Der Fahrantrieb 42 kann ein Differentialgetriebe 48 und eine Antriebsachse 44 mit Rädern 58 umfassen. Außerdem kann ein mit der Steuerung 26 verbundener Energiespeicher 27 vorgesehen sein, um elektrische Leistung zu speichern und abzugeben. Bei dem Energiespeicher 27 kann es sich beispielsweise um eine Batterievorrichtung handeln. Bei dieser Anordnung handelt es sich nur um ein mögliches Beispiel. So muss der elektrische Verbraucher 60 weder zwingend eine elektrische Antriebsachse sein, noch muss er auf dem Anbaugerät 56 angeordnet sein, sondern kann gleichermaßen auf dem Arbeitsfahrzeug 50 angeordnet sein. Auch kann anstatt eines AEF-Konnektors eine andere genormte oder nicht genormte Schnittstelle zum Einsatz kommen.

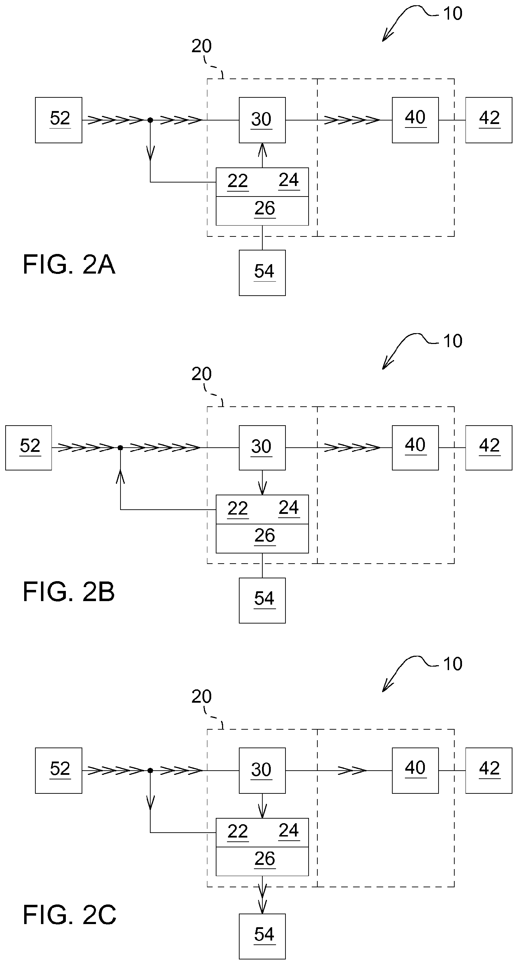

Die Figuren 2a-2c zeigen ein Blockschaltbild einer möglichen Antriebsanordnung des landwirtschaftlichen Arbeitsfahrzeugs 50. Ein Antriebsmotor 52 in Form einer Verbrennungskraftmaschine überträgt seine Antriebsleistung auf eine Getriebevorrichtung 10. Ausgehend von der Getriebevorrichtung 10 wird die Antriebsleistung auf einen Fahrantrieb 42 übertragen, der Komponenten wie ein Differentialgetriebe und eine Antriebsachse mit Rädern umfassen kann.

Die Getriebevorrichtung 10 umfasst einen Variator 20, bestehend aus zumindest einem Summierungsgetriebe 30, zumindest einer ersten elektrischen Maschine 22, zumindest einer zweiten elektrischen Maschine 24 und einer Steuerung 26, und ein Getriebe mit verstellbarer Übersetzung 40. Über die zweite elektrische Maschine 24 kann stufenlos ein Übersetzungsverhältnis des Summierungsgetriebes eingestellt werden. Das Getriebe mit verstellbarer Übersetzung 40 kann als Gruppenschaltgetriebe mit beispielsweise fünf Schaltgruppen A, B, C, D, E ausgeführt sein. In konkreter Ausgestaltung kann das Getriebe 40 als Doppelkupplungsgetriebe oder als kontinuierlich verstellbares Getriebe ausgeführt sein. Die Steuerung 26 kann über eine Leistungsschnittstelle 54 mit einem elektrischen Verbraucher verbunden werden. Die Getriebevorrichtung 10 kann außerdem ein bedarfsweise zuschaltbares Umkehrgetriebe 28, welches als Planetenradgetriebe ausgeführt sein kann, und ein bedarfsweise zuschaltbares Kriechganggetriebe 46 umfassen. Sowohl das Umkehrgetriebe 28 als auch das Kriechganggetriebe können dem Summierungsgetriebe 30 vorgeschaltet oder nachgeschaltet sein.

Über die Steuerung 26 kann eine Drehmomentverstellung der beiden elektrischen Maschinen 22, 24 unabhängig von der Drehzahl der beiden elektrischen Maschinen 22, 24 erfolgen. Abhängig von der einzustellenden Übersetzung des Summierungsgetriebes 30 kann die zweite elektrische Maschine 24 in der einen Drehrichtung im Motorbetrieb und in der entgegengesetzten Richtung im Generatorbetrieb betrieben werden. Wenn für das Summierungsgetriebe 30 eine Übersetzung einzustellen ist, für die ein Motorbetrieb der zweiten elektrischen Maschine 24 erforderlich ist, so wird die erste elektrische Maschine 22 im Generatorbetrieb betrieben und die hierdurch erzeugte elektrische Leistung der zweiten elektrischen Maschine 24 für deren Motorbetrieb zur Verfügung gestellt.

Dieser Fall der Ansteuerung kann anhand der Figur 2a in qualitativer Hinsicht erläutert werden. Anhand von Pfeilspitzen ist der Fluss von Leistungseinheiten gezeigt, wobei eine Leistungseinheit mit einer Pfeilspitze symbolisiert wird. Es wird angenommen, dass der Antriebsmotor 52 vier Leistungseinheiten abgibt, von denen drei Leistungseinheiten in das Summierungsgetriebe 30 fließen und eine Leistungseinheit über den Variator 20 in das Summierungsgetriebe 30 fließt, so dass schließlich vier Leistungseinheiten in Richtung Schaltgetriebe 40 abfließen.

Wenn für das Summierungsgetriebe 30 eine Übersetzung einzustellen ist, für die ein Generatorbetrieb der zweiten elektrischen Maschine 24 erforderlich ist, so wird hierdurch elektrische Leistung erzeugt, die einem anderen elektrischen Verbraucher zur Verfügung gestellt werden kann. Hierbei sind zwei Szenarien voneinander zu unterscheiden: Bei dem ersten Szenario besteht keine externe Leistungsanforderung, so dass die Steuerung 26 die erste elektrische Maschine 22 im Motorbetrieb ansteuert und ihr die von der zweiten elektrischen Maschine 24 erzeugte elektrische Leistung zur Verfügung stellt. Dieses erste Szenario kann anhand der Figur 2b in qualitativer Hinsicht erläutert werden. Wieder wird angenommen, dass der Antriebsmotor 52 vier Leistungseinheiten abgibt. Da die zweite elektrische Maschine 24 jedoch im Generatorbetrieb betrieben wird, fließt über das Summierungsgetriebe 30 eine Leistungseinheit zum Antrieb in die zweite elektrische Maschine 24. Diese nicht nach Extern abgeführte Leistungseinheit fließt über die im Motorbetrieb betriebene erste elektrische Maschine 22 zurück auf den Eingang des Summierungsgetriebes 30, so dass zusammen mit den vier von dem Antriebsmotor 52 abgegebenen Leistungseinheiten fünf Leistungseinheiten in das Summierungsgetriebe 30 fließen. Da hiervon eine Leistungseinheit wiederum zum Antrieb der zweiten elektrischen Maschine 24 abfließt, fließen vier Leistungseinheiten in Richtung Getriebe 40 ab. Diese Leistungsüberhöhung um eine Leistungseinheit innerhalb des Summierungsgetriebes 30 ergibt sich infolge der über den Variator 20 rückwärts zirkulierenden Blindleistung.

Bei dem zweiten Szenario besteht eine externe Leistungsanforderung, so dass die von der zweiten elektrischen Maschine 24 erzeugte elektrische Leistung einem externen Verbraucher, beispielsweise der elektrischen Antriebsachse eines Anbaugeräts, zur Verfügung gestellt werden kann. Dieses zweite Szenario kann anhand der Figur 2c in qualitativer Hinsicht erläutert werden. In der Figur 2c wird die von der zweiten elektrischen Maschine 24 erzeugte Leistungseinheit über die Steuerung 26 und den AEF-Konnektor 54 einem externen elektrischen Verbraucher zur Verfügung gestellt, um eine entsprechende externe Leitungsanforderung zu decken. Zusätzlich wird die erste elektrische Maschine 22 von der Steuerung 26 im Generatorbetrieb angesteuert und die zwei durch die beiden elektrischen Maschinen 22, 24 erzeugten Leistungseinheiten werden über den AEF-Konnektor 54 einem externen elektrischen Verbraucher zur Verfügung gestellt. Entsprechend fließen nur zwei Leistungseinheiten in Richtung des Fahrantriebs 42. Lediglich in einem hier nicht dargestellten Sonderfall kann die Steuerung 26 die erste elektrische Maschine 22 in einem Leerlaufzustand ansteuern, so dass entsprechend von den vier Leistungseinheiten des Antriebsmotors 52 nur drei Leistungseinheiten in Richtung des Fahrantriebs 42 und eine Leistungseinheit über den AEF-Konnektor 54 fließen.

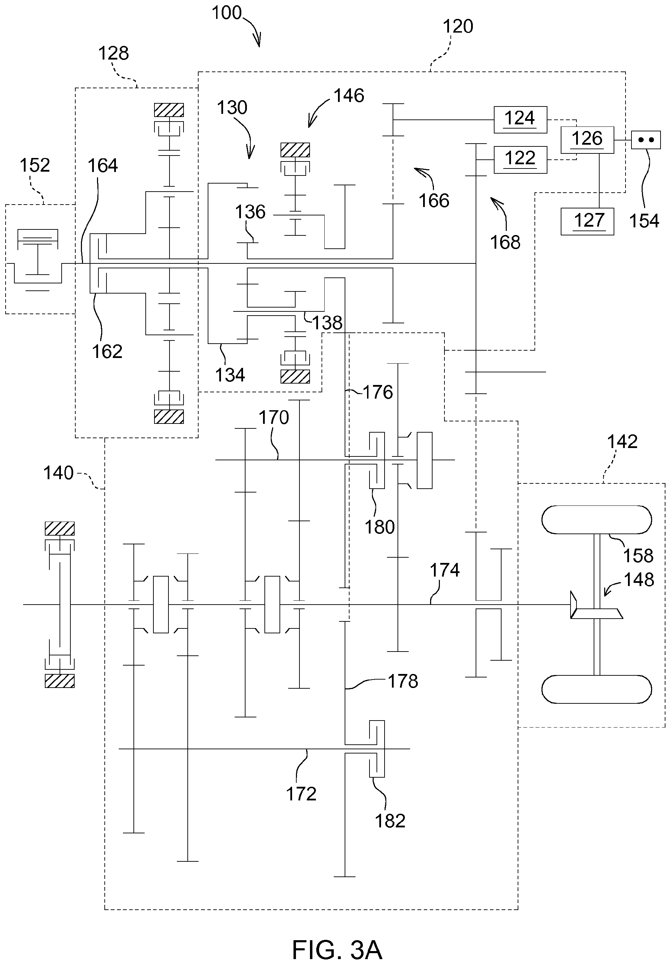

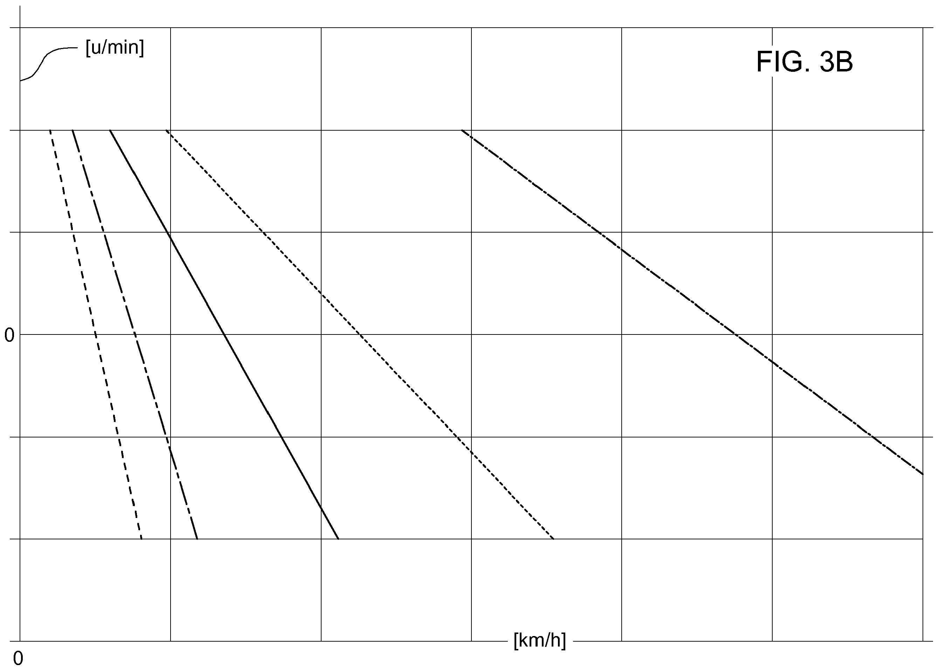

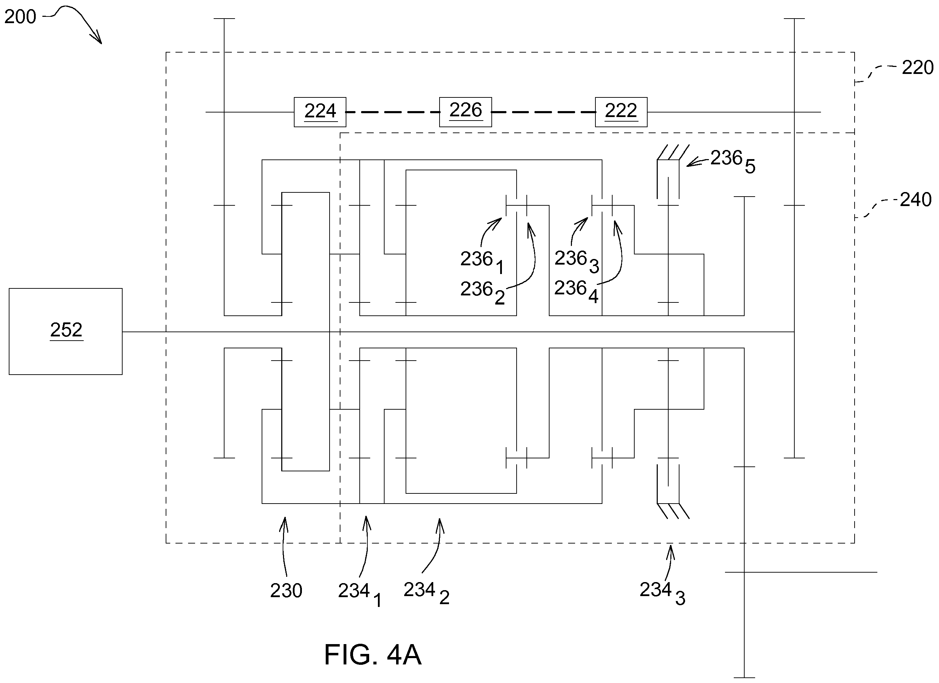

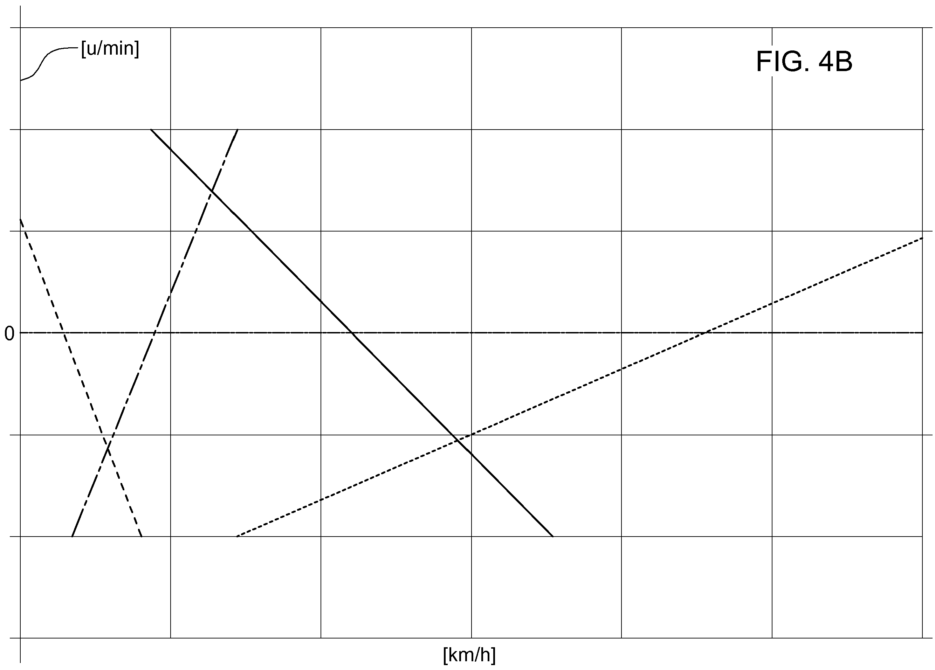

Im Folgenden werden anhand der Figuren 3a-7b verschiedene, mögliche Konfigurationen von Getriebevorrichtungen und die entsprechende Durchführung des erfindungsgemäßen Getriebesteuerverfahrens beschrieben. Grundsätzlich ist bei den beschriebenen Getriebevorrichtungen zu unterscheiden zwischen einer Konfiguration (Figuren 3a, 3b, 4a, 4b), bei der beim Wechseln der Übersetzungen des Getriebes 40 einen Drehzahlsprung der zweiten elektrischen Maschine 24 durchzuführen ist und einer Konfiguration (Figuren 4a - 5b), bei der beim Wechseln der Übersetzungen des Getriebes 40 kein oder nur ein sehr geringer Drehzahlsprung der zweiten elektrischen Maschine 24 durchzuführen ist. Weiterhin handelt es sich bei den Getriebevorrichtungen der Figuren 3a-5b um eingangsgekoppelte Anordnungen.

In der Figuren 3a-3d werden bereits in den vorherigen Figuren beschriebene Bauteile mit einem um 100 hochgesetztem Bezugszeichen versehen. Die Figur 3a zeigt eine Antriebsanordnung des landwirtschaftlichen Arbeitsfahrzeugs, bei der ein Antriebsmotor 152 in Form einer Verbrennungskraftmaschine seine Antriebsleistung über ein bedarfsweise zuschaltbares reversierbares Planetenradgetriebe 128 und eine erfindungsgemäße Getriebevorrichtung 100 auf einen Fahrantrieb 142 überträgt. Der Fahrantrieb 142 kann regelmäßig ein Differentialgetriebe 148 und eine hintere Antriebsachse 144 mit Rädern 158 umfassen. Die Getriebevorrichtung 100 umfasst einen elektrischen Variator 120, bestehend aus einem Summierungsgetriebe 130 in Form eines Planetenradgetriebes und einer ersten elektrischen Maschine 122 und einer zweite elektrische Maschine 124 zum stufenlosen Einstellen eines Übersetzungsverhältnisses des Summierungsgetriebes 130, und ein Getriebe mit verstellbarer Übersetzung 140 in Form eines Gruppenschaltgetriebes mit vorliegend fünf Schaltgruppen A, B, C, D und E. Der Variator 120 entspricht der Konfiguration, wonach beim Wechseln der Übersetzungen des Getriebes 140 ein Drehzahlsprung der zweiten elektrischen Maschine 124 durchzuführen ist. Dem Planetenradgetriebe 130 kann unmittelbar ein bedarfsweise zuschaltbares Kriechganggetriebe 146 nachgeordnet sein. Die beiden elektrischen Maschinen 122, 124 sind über die Steuerung 126 mit dem AEF-Konnektor 154 verbunden. Es können weitere aber nicht dargestellte Abtriebe vorgesehen sein, beispielsweise ein Abtrieb für einen Zapfwellenantrieb oder ein Abtrieb für einen bedarfsweise zuschaltbaren Vorderradantrieb.

Der Antrieb des Planetenradgetriebes 130 erfolgt durch den Antriebsmotor 152 über das Hohlrad 134 des Planetenradgetriebes 130 und der Abtrieb in Richtung des Getriebes 140 erfolgt über den Planetenradträger 138 des Planetenradgetriebes 130. Hierzu kann über ein Schaltelement 162 das Hohlrad 134 mit der Antriebswelle 164 des Antriebsmotors 152 antriebsmäßig verbunden werden. Die zweite elektrische Maschine 124 ist über eine erste Stirnradstufe 166 antriebsmäßig mit dem Sonnenrad 136 des Planetenradgetriebes 130 verbunden, um stufenlos das Übersetzungsverhältnis zwischen dem angetriebenen Hohlrad 134 und dem treibenden Planetenradträger 138 des Planetenradgetriebes 130 zu variieren. Die erste elektrische Maschine 122 ist über eine zweite Stirnradstufe 168 antriebsmäßig mit der Antriebswelle 164 des Antriebsmotors 152 verbunden.

Das Getriebe 140 ist bei dem vorliegenden Ausführungsbeispiel als Doppelkupplungsgetriebe mit einer ersten Vorgelegewelle 170, einer zweiten Vorgelegewelle 172 und einer Abtriebswelle 174 ausgeführt. Mit dem Planetenradträger 138 des Planetenradgetriebes 130 stehen ein erstes auf der ersten Vorgelegewelle 170 gehaltenes Zahnrad 176 und ein zweites auf der zweiten Vorgelegewelle 172 gehaltenes Zahnrad 178 in einem Verzahnungseingriff. Das erste Zahnrad 176 kann über ein Schaltelement 180 mit der ersten Vorgelegewelle 170 und das zweite Zahnrad 178 kann über ein Schaltelement 182 mit der zweiten Vorgelegewelle 172 in eine Antriebsverbindung gebracht werden. Ausgehend von den Vorgelegewellen 170, 172 kann über nicht näher zu beschreibende Zahnradpaarungen und Schaltelemente ein Kraftfluss zu der Abtriebswelle 174 geschaltet werden, die ihrerseits den Fahrantrieb 142 antreibt.

Die Figur 3b zeigt ein Drehzahl-Geschwindigkeits-Diagramm, in dem für die fünf Übersetzungsbereiche A, B, C, D, E des Getriebes 140 die Drehzahlverläufe der zweiten elektrischen Maschine 124 über der Fahrgeschwindigkeit des Arbeitsfahrzeugs150 aufgetragen sind. Die zweite elektrische Maschine 124 befindet sich im Generatormodus, wenn der Betrag der Drehzahl positiv ist, das heißt in der oberen Hälfte der Figur 3b. Die im Generatormodus erzeugte elektrische Leistung muss entweder, wenn keine externe Leistungsanforderung besteht, als Blindleistung über die im Motormodus betriebene erste elektrische Maschine 122 zirkuliert werden oder sie kann dazu benutzt werden eine bestehende externe Leistungsanforderung zu decken. Besteht eine externe Leistungsanforderung, kann durch eine geeignete Wahl des jeweils geschalteten Übersetzungsbereichs des Getriebes 140 die zweite elektrische Maschine 124 ihre Drehzahlverläufe möglichst durchgängig im dem Bereich durchfahren, der einem Generatormodus entspricht. Dies kann erreicht werden, indem ein Wechseln des Übersetzungsbereichs des Getriebes 140 dann erfolgt, wenn die niedrigste Fahrgeschwindigkeit, die mit einem Drehzahlverlauf der zweiten elektrischen Maschine 124 erreicht werden kann, unterhalb der Fahrgeschwindigkeit liegt, die mit dem nächst niedrigeren Drehzahlverlauf der zweiten elektrischen Maschine 124 in dem Punkt erreicht wird, in dem dieser niedrigere Drehzahlverlauf zwischen Generator- und Motormodus wechselt. Besteht also eine externe Leistungsanforderung, so kann die zweite elektrische Maschine 124 durch geeignete Wahl des Übersetzungsbereichs des Getriebes 140 generatorisch betriebenen werden und gleichzeitig kann, sofern der externe Leistungsbedarf nicht alleine durch die zweite elektrische Maschine 124 gedeckt werden kann, die erste elektrische Maschine 122 ebenfalls generatorisch betrieben werden, da diese keine elektrische Leistung aufnehmen muss, um sie im Motorbetrieb als Blindleistung zu zirkulieren.

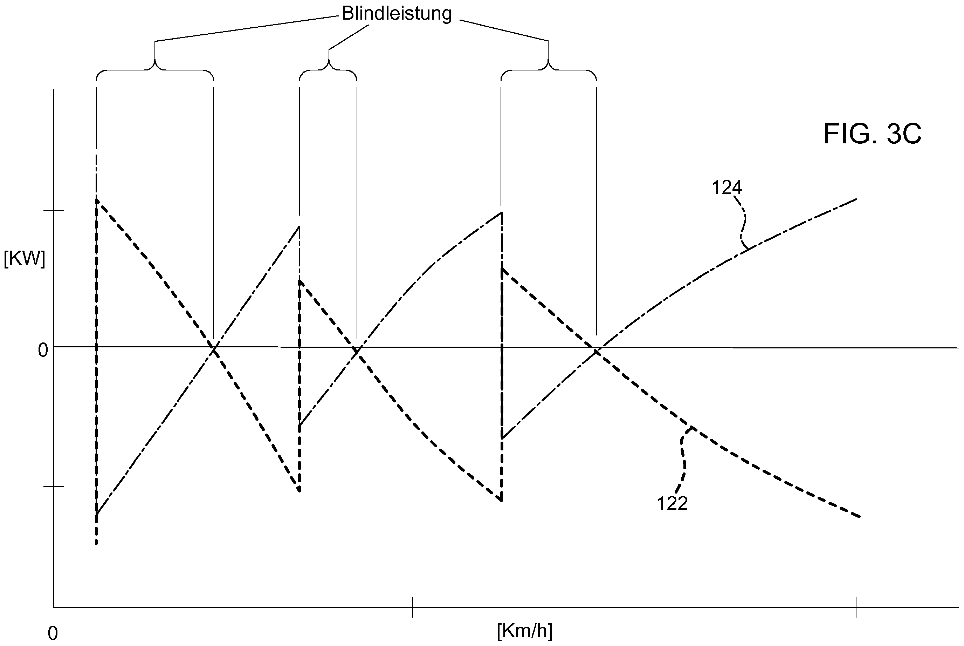

Die Figur 3c zeigt einen Bereich der elektrischen Leistungen der beiden elektrischen Maschinen 122, 124, aufgetragen über einem Ausschnitt der Fahrgeschwindigkeit des Arbeitsfahrzeugs 150 für drei Übersetzungsbereiche A, B, C des Getriebes 140. Die strichpunktierte Kurve entspricht der elektrischen Leistung der zweiten elektrischen Maschine 124 und die gestrichelte Kurve der elektrischen Leistung der ersten elektrischen Maschine 122. Es liegt keine externe Leistungsanforderung vor. Die Figur 3c zeigt das Ergebnis einer Berechnung der elektrischen Leistungen, die von einer Drehzahl des Antriebsmotors 152 von 1900 U/min und einer vollständigen Leistungsauslastung des Antriebsmotors 152 ausgeht. Zu erkennen sind gegenläufige Verläufe der Leistungen der beiden elektrischen Maschinen 122, 124. Das Arbeitsfahrzeug 150 beschleunigt in dem ersten Übersetzungsbereich A des Getriebes 140. In diesem Schaltbereich werden zunächst die zweite elektrische Maschine 124 im Generatorbetrieb und die erste elektrische Maschine 122 im Motorbetrieb betrieben, so dass Blindleistung in dem Variator 120 zirkuliert. Dieser Blindleistungsfluss hält an, bis ein Wechsel der Betriebsmodi der beiden elektrischen Maschinen 122, 124 stattfindet, so dass die zweite elektrische Maschine 124 im Motorbetrieb und die erste elektrische Maschine 122 im Generatorbetrieb betrieben werden und keine Blindleistung zirkuliert. Wenn die beiden elektrischen Maschinen 122, 124 wieder ihren betragsmäßig maximalen Leistungswert erreichen, wird in den zweiten Übersetzungsbereich B des Getriebes 140 geschaltet und das Arbeitsfahrzeug 150 beschleunigt weiter. Sowohl für diesen als auch den weiteren dargestellten Übersetzungsbereich C des Getriebes 140 entsprechen die Verläufe der elektrischen Leistungen der beiden elektrischen Maschinen 122, 124 wie soeben für den Übersetzungsbereich A beschrieben, das heißt nach dem Schalten in den Übersetzungsbereich zirkuliert zunächst Blindleistung in dem Summierungsgetriebe 130, bis bei weiterer Beschleunigung die zweite elektrische Maschine 124 im Motorbetrieb und die erste elektrische Maschine 122 im Generatorbetrieb betrieben werden.

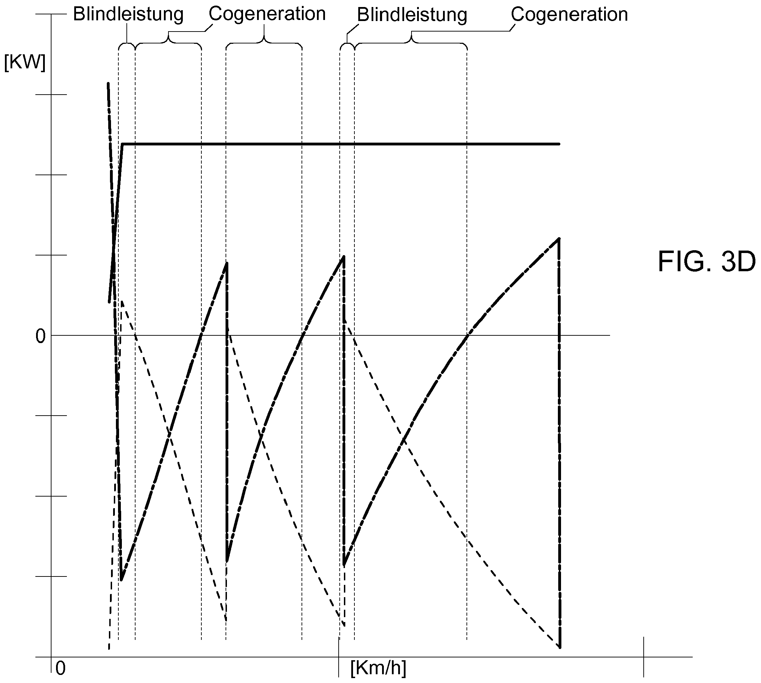

Die Figur 3d zeigt das Ergebnis einer Berechnung der elektrischen Leistungen unter Anwendung des erfindungsgemäßen Getriebeansteuerverfahrens. Auch hier wird ausgegangen von einer Drehzahl des Antriebsmotors 152 von 1900 U/min und einer vollständigen Leistungsauslastung des Antriebsmotors 152. Ferner wird von einer maximalen nach Extern abzugebenden Leistung in Höhe von X kW ausgegangen, um einen externen Leistungsbedarf zu decken. Bei der Höhe X kW nach Extern abzugebender Leistung handelt es sich lediglich um einen für die vorliegende Berechnung angenommenen Wert, der in der Realität variieren kann. Verglichen mit der Figur 3b sind in der Figur 3c die Verläufe der elektrischen Leistungen der beiden elektrischen Maschinen 122, 124 grundsätzlich gleich. Das heißt nach einem Wechsel der Übersetzungsbereiche des Schaltgetriebes 140 Wechseln die beiden elektrischen Maschinen 122, 124 ihre Betriebsmodi, was allerdings in der Realität infolge nicht infinitesimal kurzer Schaltzeiten nicht derart zügig erfolgen kann, und während des Durchlaufens der Übersetzungsbereiche verlaufen die elektrischen Leistungen der beiden Maschinen 122, 124 mit entgegengesetzter Steigung zu einander und kreuzen sich innerhalb eines Übersetzungsbereichs. Im Unterschied zu Figur 3b sind bei den Verläufen der Figur 3c die Schaltpunkte zwischen den Übersetzungsbereichen des Schaltgetriebes 140 erfindungsgemäß derart gewählt worden, dass sie, bezogen auf die Fahrgeschwindigkeit, früher vollzogen werden und die Bereiche, in denen beide elektrische Maschinen 122, 124 im Generatorbetrieb betrieben werden, vergrößert beziehungsweise bezogen auf Fahrgeschwindigkeitsbereiche verbreitert werden. Verglichen mit der Figur 3b, in denen in bestimmten Bereichen ein Leistungsanteil als Blindleistung in dem Variator 120 zirkuliert, wird bei dem in der Figur 3c dargestellten Getriebeansteuerverfahren gemäß der Erfindung dieser Leistungsanteil über die Steuerung 126 als externe Leistung einem externen elektrischen Verbraucher zur Verfügung gestellt und zumindest überwiegend nicht in dem Variator 120 zirkuliert. In der Figur 3c sind bezogen auf die Fahrgeschwindigkeit lediglich verhältnismäßig schmale Bereiche zu erkennen, in denen eine Blindleistung in dem Variator 120 zirkuliert. In diesen Bereichen übersteigt die durch die zweite elektrische Maschine 124 generatorisch erzeugte Leistung die nach Extern abgegebene Leistung von X kW, so dass die erste elektrische Maschine 122 motorisch betrieben wird, um diese überschüssige Leistung aufzunehmen, welche dann als Blindleistung in dem Variator 120 zirkuliert. Auch sind in der Figur 3c Bereiche zu erkennen, in denen die zweite elektrische Maschine 124 motorisch und die erste elektrische Maschine 122 generatorisch betrieben werden, wobei allerdings die von der ersten elektrischen Maschine 122 erzeugte elektrische Leistung die von der zweiten elektrischen Maschine 124 aufgenommene Leistung übersteigt, so dass die den Leistungsbedarfs der zweiten elektrischen Maschine 124 übersteigende Leistung als externe Leistung zur Verfügung gestellt werden kann.

Im Folgenden werden anhand der Figuren 4a bis 5b Antriebsanordnungen eines landwirtschaftlichen Arbeitsfahrzeugs mit einer Konfiguration beschrieben, die beim Wechseln der Übersetzungen des Getriebes 240, 340 keinen oder nur einen sehr geringen Drehzahlsprung der zweiten elektrischen Maschine 224, 324 erfordert.

In den Figuren 4a, 4b werden bereits in den vorherigen Figuren beschriebene Bauteile ein weiteres Mal mit einem um 100 hochgesetztem Bezugszeichen versehen. Die Figur 4a zeigt eine von einem Antriebsmotor 252 angetriebene Getriebevorrichtung 200 für ein landwirtschaftliches Arbeitsfahrzeug mit einem Variator 220 und einem drei Planetenradsätze 234₁ - 234₃ und fünf Schaltelementen 236₁ - 236₅ umfassenden Getriebe 240. Der Variator 220 umfasst ein Summierungsgetriebe 230, eine erste und eine zweite elektrische Maschine 222, 224 und eine Steuerung 226. Auf eine Beschreibung der Funktionsweise der Getriebevorrichtung 200 gemäß Figur 4a wird verzichtet.

Die Figur 4b zeigt ein Drehzahl-Geschwindigkeits-Diagramm, in dem für vier Übersetzungsbereiche der Getriebevorrichtung 200 die Drehzahlverläufe der zweiten elektrischen Maschine 224 über der Fahrgeschwindigkeit des Arbeitsfahrzeugs aufgetragen sind. Die zweite elektrische Maschine 224 befindet sich auf dem Abschnitt eines jeden Drehzahlverlaufs im Generatorbetrieb, der sich links an den Nulldurchgang des jeweiligen Drehzahlverlaufs anschließt. Besteht eine externe Leistungsanforderung, kann durch geeignete Wahl des eingestellten Übersetzungsbereichs des Getriebes 240 ein möglichst durchgängiger Generatorbetrieb der zweiten elektrischen Maschine 224 erreicht werden, wenn die niedrigste Fahrgeschwindigkeit, die mit einem Drehzahlverlauf der zweiten elektrischen Maschine 224 erreicht werden kann, unterhalb der Fahrgeschwindigkeit liegt, die mit dem nächst niedrigeren Drehzahlverlauf der zweiten elektrischen Maschine 224 in dem Punkt erreicht wird, in dem dieser niedrigere Drehzahlverlauf zwischen Generator- und Motormodus wechselt.

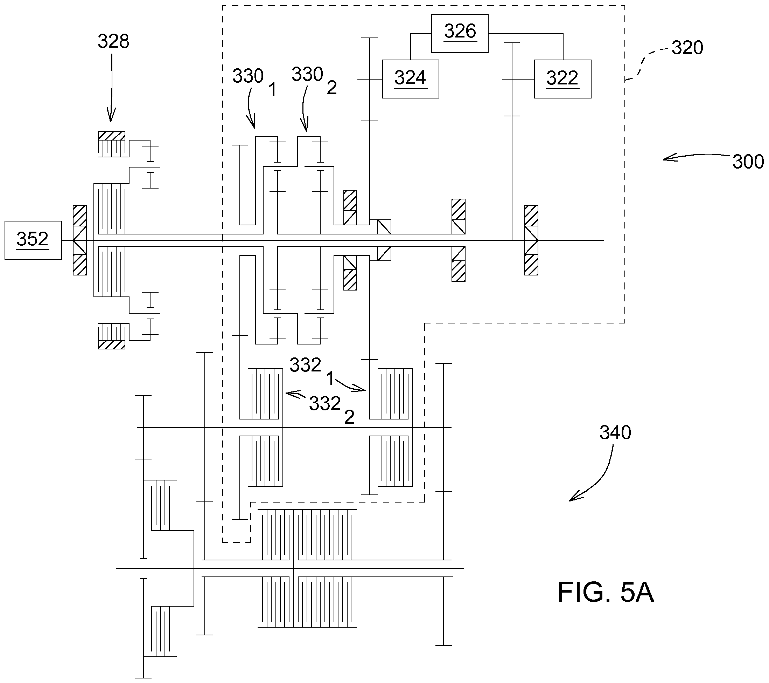

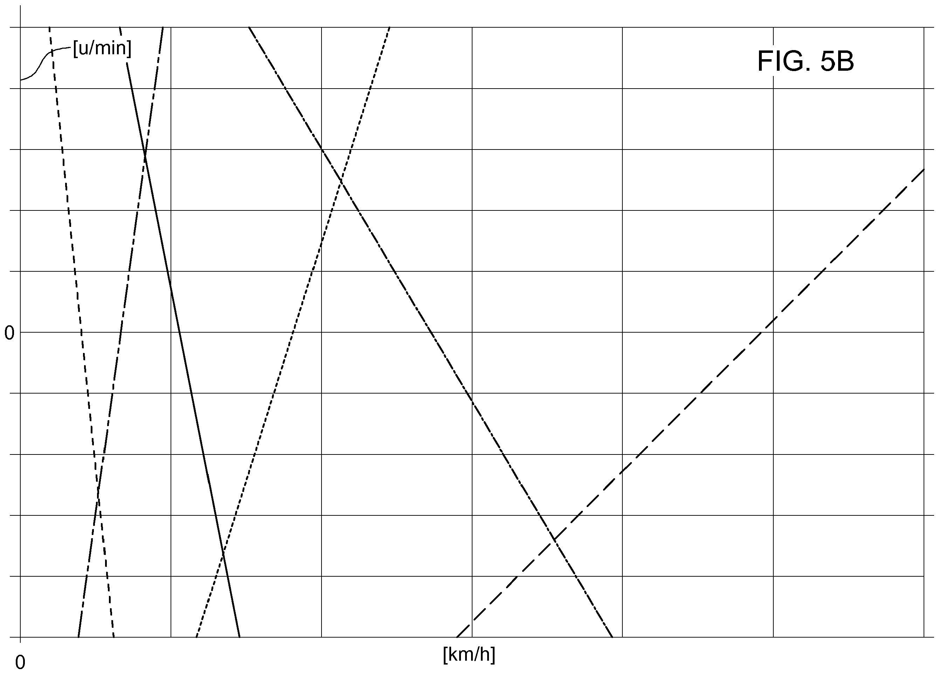

In den Figuren 5a, 5b werden bereits in den vorherigen Figuren beschriebene Bauteile ein weiteres Mal mit einem um 100 hochgesetztem Bezugszeichen versehen. Die Figur 5a zeigt eine von einem Antriebsmotor 352 angetriebene Getriebevorrichtung 300 für ein landwirtschaftliches Arbeitsfahrzeug mit einem Variator 220 und einem Gruppenschaltgetriebe 340 mit drei Schaltgruppen. Zwischen dem Antriebsmotor 352 und dem Variator 320 kann ein Umkehrgetriebe 328 vorgesehen sein. Ebenfalls kann ein nicht dargestelltes Kriechganggetriebe vorgesehen sein. Der Variator 320 umfasst zwei Summierungsgetriebe 330₁, 330₂, eine erste und eine zweite elektrische Maschine 322, 324, eine Steuerung 326 und zwei Übersetzungsstufen 332₁, 332₂, über die jeweils der Kraftfluss in das Gruppenschaltgetriebe 340 geführt wird. Infolge der zwei Summierungsgetriebe 330₁, 330₂ und den drei Schaltgruppen des Gruppenschaltgetriebes 340 ergeben sich sechs Übersetzungsbereiche bei der Getriebevorrichtung 300. Auf eine weitere Beschreibung der Funktionsweise der Getriebevorrichtung 300 gemäß Figur 5a wird verzichtet.

Die Figur 5b zeigt ein Drehzahl-Geschwindigkeits-Diagramm, in dem für die sechs Übersetzungsbereiche der Getriebevorrichtung 300 die Drehzahlverläufe der zweiten elektrischen Maschine 324 über der Fahrgeschwindigkeit des Arbeitsfahrzeugs aufgetragen sind. Bezüglich der Beschreibung des Drehzahl-Geschwindigkeits-Diagramms der Figur 5b wird auf die entsprechende Beschreibung zu der Figur 4b verwiesen, da sich die Drehzahlverläufe der Figuren 4b und 5b qualitativ entsprechen.

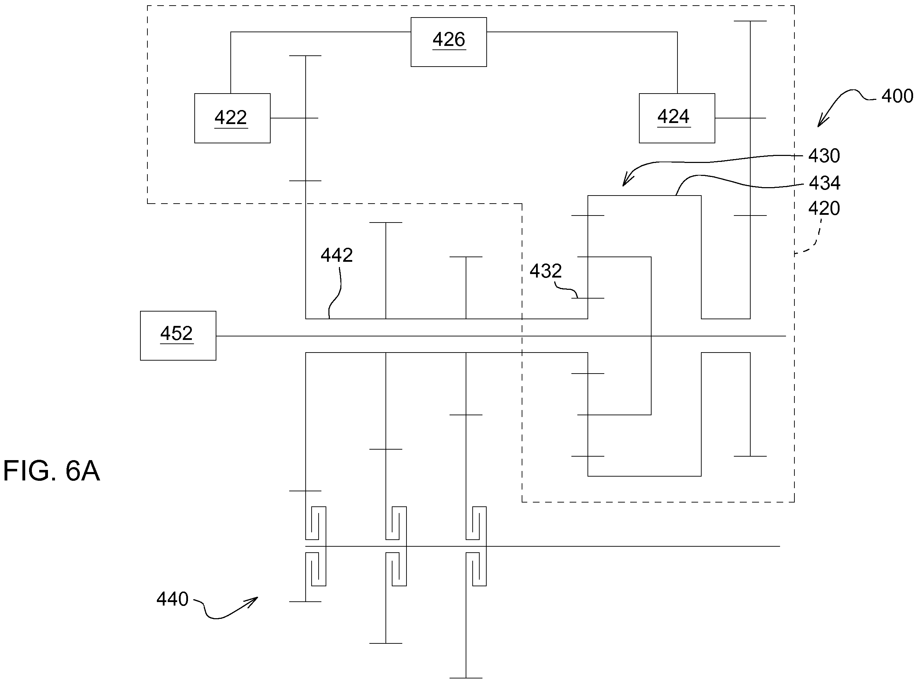

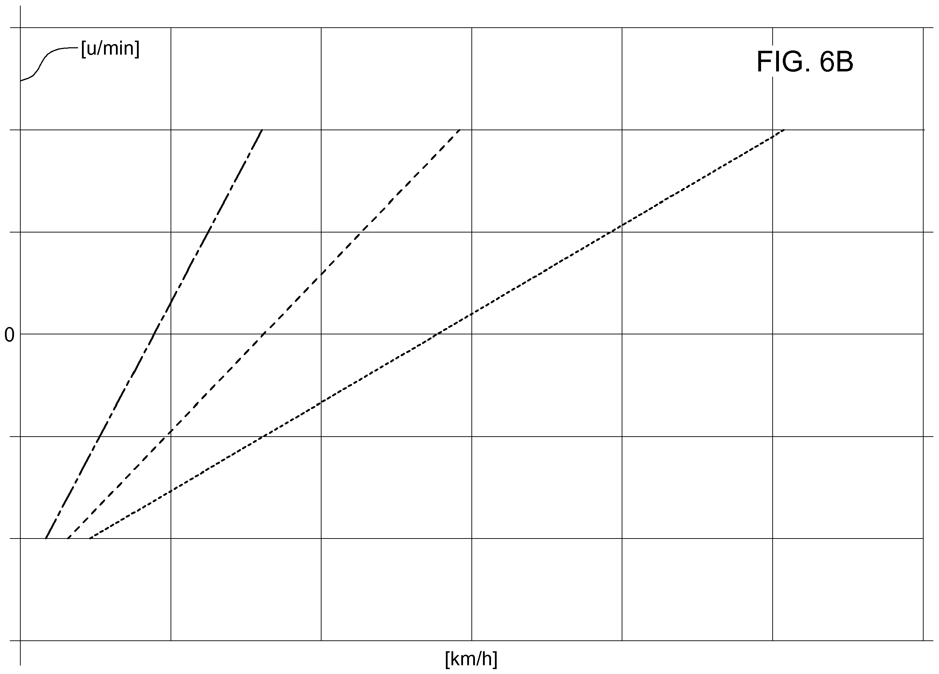

In den Figuren 6a, 6b werden bereits in den vorherigen Figuren beschriebene Bauteile ein weiteres Mal mit einem um 100 hochgesetztem Bezugszeichen versehen. Die Figuren 6a und 6b zeigen eine von einem Antriebsmotor 452 angetriebene ausgangsgekoppelte Getriebevorrichtung 400 mit einem Variator 420 und einem Gruppenschaltgetriebe 440 mit drei Schaltgruppen. Der Variator 420 umfasst ein Summierungsgetriebe 430, eine erste und eine zweite elektrische Maschine 422, 424 und eine Steuerung 426. Der Antrieb der ersten elektrischen Maschine 422 erfolgt über das Sonnenrad 432 des Summierungsgetriebes 430, wobei der Antrieb über eine Hohlwelle 442 durch das Gruppenschaltgetriebe 440 durchgeführt ist. Der Antrieb der zweiten elektrischen Maschine 424 erfolgt über das Hohlrad 434 des Summierungsgetriebes 430. Auf eine weitere Beschreibung der Funktionsweise der Getriebevorrichtung 400 gemäß Figur 6a wird verzichtet.

Die Figur 6b zeigt ein Drehzahl-Geschwindigkeits-Diagramm, in dem für die drei Übersetzungsbereiche der Getriebevorrichtung 400 die Drehzahlverläufe der zweiten elektrischen Maschine 424 über der Fahrgeschwindigkeit des Arbeitsfahrzeugs aufgetragen sind. Bezüglich der Beschreibung des Drehzahl-Geschwindigkeits-Diagramms der Figur 5b wird auf die entsprechende Beschreibung zu der Figur 3b verwiesen, da sich die Drehzahlverläufe der Figuren 3b und 6b qualitativ entsprechen, mit dem Unterschied, dass in Figur 6b sich die zweite elektrische Maschine 424 im Generatormodus befindet, wenn der Betrag der Drehzahl negativ ist, das heißt in der unteren Hälfte der Figur 6b.

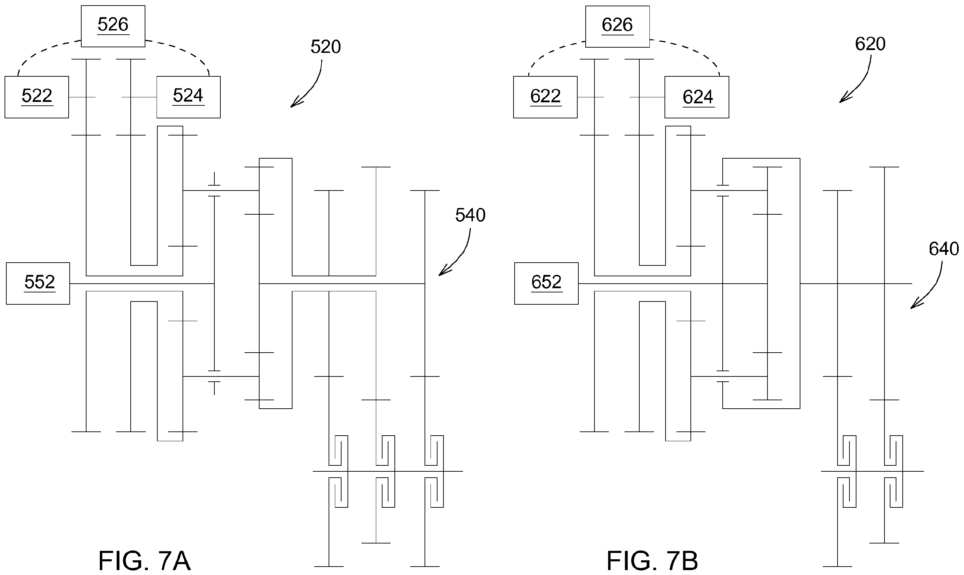

In den Figuren 7a, 7b werden bereits in den vorherigen Figuren beschriebene Bauteile ein weiteres Mal mit einem um 100 hochgesetztem Bezugszeichen versehen. Die Figuren 7a und 7b zeigen jeweils ein Ausführungsbeispiel einer compoundgekoppelten Getriebevorrichtung 500, 600. Eine compoundgekoppelten Konfiguration erfordert eine enges Zusammenspiel beider elektrischer Maschinen 522, 624, 522, 624, da keine der keine unmittelbar mit einer Eingangsdrehzahl oder einer Ausgangsdrehzahl eines Summierungsgetriebes gekoppelt ist. Vielmehr kann jede der elektrischen Maschinen derart angesteuert werden, dass sie anteilig und komplementär spannungsgeregelt oder drehzahlgeregelt betrieben werden. Auch bei den gezeigten compoundgekoppelten Getriebevorrichtung 500, 600 kann das Getriebe 540, 640 in einem Übersetzungsbereich betrieben werden, dass beide elektrische Maschinen 522, 624, 522, 624 generatorisch betrieben werden können.

Zusammenfassend ergibt sich bei einer erfindungsgemäßen Getriebesteuerung der beispielmäßig beschriebenen Getriebevorrichtung die Möglichkeit beide elektrische Maschinen im Generatorbetrieb zu betreiben, wodurch der Gesamtwirkungsgrad der Getriebevorrichtung steigt. Zudem ergibt sich durch das Getriebesteuerverfahren die Möglichkeit mit der bestehenden Getriebevorrichtung in einer relevanten Größenordnung elektrische Leistung zu generieren.

### Bezugszeichenliste

- 10: Getriebevorrichtung
- 20: Variator
- 22: elektrische Maschine
- 24: elektrische Maschine
- 26: Steuerung
- 27: Energiespeicher
- 28: Umkehrgetriebe
- 30: Summierungsgetriebe
- 40: Getriebe
- 42: Fahrantrieb
- 44: Antriebsachse
- 46: Kriechganggetriebe
- 48: Differentialgetriebe
- 50: Arbeitsfahrzeug
- 52: Antriebsmotor
- 54: Leistungsschnittstelle
- 56: Anbaugerät
- 58: Räder
- 60: elektrischer Verbraucher

- 134: Hohlrad
- 136: Sonnenrad
- 138: Planetenradträger
- 162: Schaltelement
- 164: Antriebswelle
- 166: Stirnradstufe
- 168: Stirnradstufe
- 170: Vorgelegewelle
- 172: Vorgelegewelle
- 174: Abtriebswelle
- 176: erstes Zahnrad
- 178: zweites Zahnrad

## Patentansprüche

1. Verfahren zur Ansteuerung einer leistungsverzweigten Getriebevorrichtung (10) in einem Fahrzeug (50), wobei die Getriebevorrichtung (10) einen elektrischen Variator (20) und ein Getriebe mit verstellbarer Übersetzung (40) umfasst, um einen Antriebsmotor (52) mit einem Fahrantrieb (42) des Fahrzeugs (50) zu verbinden und
wobei der elektrische Variator (20) ein Summierungsgetriebe (30), zumindest eine erste und zumindest eine zweite elektrische Maschine (22, 24) und eine Steuerung (26) der elektrischen Maschinen (22, 24) zum stufenlosen Variieren einer Übersetzung des Summierungsgetriebes (30) umfasst,
bei dem bei Erkennen einer externen Leistungsanforderung eines elektrischen Verbrauchers (60) ein Übersetzungsbereich des Getriebes mit verstellbarer Übersetzung (40) derart eingestellt wird, dass die erste elektrische Maschine (22) generatorisch und die zweite elektrische Maschine (24) derart betrieben wird, dass eine bezogen auf die externe Leistungsanforderung bestehende Leistungsunterdeckung oder Leistungsüberdeckung kompensiert wird.

2. Verfahren nach Anspruch 1, **dadurch gekennzeichnet, dass** eine Übersetzung des Getriebes (40) unter Berücksichtigung eines Fahrwiderstandes, der externen Leistungsanforderung und eines Fahrgeschwindigkeitswunsches eingestellt wird.

3. Verfahren nach Anspruch 1 oder 2, **dadurch gekennzeichnet, dass** ein mit der Steuerung (26) verbundener Energiespeicher (27) vorgesehen ist, um eine bezogen auf die externe Leistungsanforderung bestehende Leistungsüberdeckung oder Leistungsunterdeckung zu kompensieren.

4. Verfahren nach einem der Ansprüche 1 bis 3, **dadurch gekennzeichnet, dass** über die Steuerung (26) eine Drehmomentverstellung der elektrischen Maschinen (22, 24) unabhängig von der Drehzahl der elektrischen Maschinen (22, 24) erfolgen kann, um Energie in jede der elektrischen Maschinen (22, 24) oder einen Energiespeicher (27) zu speisen und jede der beiden elektrische Maschinen (22, 24) generatorisch zu betreiben.

## Claims

1. Method for activating a power-split transmission device (10) in a vehicle (50),
wherein the transmission device (10) comprises an electric variator (20) and a transmission with an adjustable transmission ratio (40), in order to connect a drive motor (52) to a travel drive (42) of the vehicle (50), and
wherein the electric variator (20) comprises a summation transmission (30), at least one first and at least one second electric machine (22, 24) and a controller (26) of the electric machines (22, 24) for infinitely variably varying a transmission ratio of the summation transmission (30),
in which, when an external power requirement of an electric consumer (60) is identified, a transmission ratio range of the transmission with an adjustable transmission ratio (40) is set in such a manner that the first electric machine (22) is operated in the generator mode and the second electric machine (24) is operated in such a manner that a power shortfall or power oversupply existing with respect to the external power requirement is compensated for.

2. Method according to Claim 1, **characterized in that** a transmission ratio of the transmission (40) is set taking into account a driving resistance, the external power requirement and a driving speed desire.

3. Method according to Claim 1 or 2, **characterized in that** an energy store (27) which is connected to the controller (26) is provided in order to compensate for a power oversupply or power shortfall existing with respect to the external power requirement.

4. Method according to one of Claims 1 to 3, **characterized in that** the controller (26) can be used to adjust the torque of the electric machines (22, 24) independently of the rotational speed of the electric machines (22, 24) in order to feed energy into each of the electric machines (22, 24) or into an energy store (27) and to operate each of the two electric machines (22, 24) in the generator mode.

## Revendications

1. Procédé de commande d'un dispositif (10) de boîtier renvoi d'angle à double sortie dans un véhicule (50),
le dispositif (10) de boîtier renvoi comprenant un variateur électrique (20) et un mécanisme à transmission réglable (40), afin de relier un moteur d'entraînement (52) avec un entraînement de conduite (42) du véhicule (50) et
le variateur électrique (20) comprenant un mécanisme de sommation (30), au moins une première et au moins une deuxième machine électrique (22, 24) et une commande (26) des machines électriques (22, 24) pour la variation continue d'une transmission du mécanisme de sommation (30),
dans lequel, à la détection d'une demande de puissance externe d'un consommateur électrique (60), une plage de transmission du mécanisme à transmission réglable (40) est ajustée de telle sorte que la première machine électrique (22) fonctionne en tant que générateur et que la deuxième machine électrique (24) fonctionne de telle sorte qu'un déficit ou un excès de puissance existant par rapport à la demande de puissance externe soit compensé.

2. Procédé selon la revendication 1, **caractérisé en ce qu'**une transmission du mécanisme (40) est ajustée en tenant compte d'une résistance à l'avancement, de la demande de puissance externe et d'un souhait de vitesse de conduite.

3. Procédé selon la revendication 1 ou 2, **caractérisé en ce qu'**un accumulateur d'énergie (27) connecté à la commande (26) est prévu afin de compenser un déficit ou un excès de puissance existant par rapport à la demande de puissance externe.

4. Procédé selon l'une quelconque des revendications 1 à 3, **caractérisé en ce que** par le biais de la commande (26), un réglage de couple des machines électriques (22, 24) peut être effectué indépendamment de la vitesse de rotation des machines électriques (22, 24), afin de fournir de l'énergie dans chacune des machines électriques (22, 24) ou dans un accumulateur d'énergie (27) et de faire fonctionner chacune des deux machines électriques (22 ,24) en tant que générateur.
